(19) Europäisches Patentamt / European Patent Office / Office européen des brevets

(11) **EP 4 300 214 A1**

(12) **DEMANDE DE BREVET EUROPEEN**

(43) Date de publication:
**03.01.2024 Bulletin 2024/01**

(21) Numéro de dépôt: **22199247.2**

(22) Date de dépôt: **30.09.2022**

(51) Classification Internationale des Brevets (IPC):
**G04B 19/04** *(2006.01)*    **G04D 3/00** *(2006.01)*
**G04D 3/02** *(2006.01)*

(52) Classification Coopérative des Brevets (CPC):
**G04B 19/042; G04D 3/0046; G04D 3/0069;
G04D 3/0272**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **28.06.2022 EP 22181575**

(71) Demandeur: **The Swatch Group Research and
Development Ltd
2074 Marin (CH)**

(72) Inventeurs:
• **ODEH, Ahmad
1020 Renens (CH)**
• **SPRINGER, Simon
3007 Berne (CH)**
• **ROSSIER, Gérard
2300 La Chaux-de-Fonds (CH)**
• **VUILLEUMIER, Gilles
2542 Pieterlen (CH)**

(74) Mandataire: **ICB SA
Faubourg de l'Hôpital, 3
2001 Neuchâtel (CH)**

(54) **PROCEDE DE FABRICATION D'UNE AIGUILLE D'HORLOGERIE DE SECTION CIRCULAIRE**

(57) La présente invention concerne une aiguille d'horlogerie (20) comprenant un corps de section circulaire monobloc, et son procédé de fabrication, le procédé de fabrication comprenant une première étape consistant à se munir d'une pièce monobloc en matériau prédéfini, la pièce s'étendant selon un axe longitudinal ; une deuxième étape consistant à mettre en rotation ladite pièce monobloc ; une troisième étape consistant à émettre une première modulation de ladite lumière laser en puissance, en géométrie et en temps ; une quatrième étape consistant à exposer une première portion de ladite au moins une pièce monobloc à ladite première modulation de ladite lumière laser de sorte à former au moins un premier volume de section circulaire d'une longueur $L_1$ et d'un diamètre moyen $D_1$, le rapport $\frac{L_1}{D_1}$ étant inférieur ou égal à 20 ou 10, voire inférieur ou égal à 5 ; une cinquième étape consistant à émettre une deuxième modulation de ladite lumière laser en puissance, en géométrie et en temps ; et une sixième étape consistant à exposer une deuxième portion de ladite au moins une pièce monobloc à ladite deuxième modulation de ladite lumière laser, de sorte à former au moins un deuxième volume de section circulaire d'une longueur $L_2$ et d'un diamètre moyen $D_2$, le rapport $\frac{L_2}{D_2}$ étant inférieur ou égal à 10, voire inférieur ou égal à 5.

Fig. 6

## Description

Domaine technique de l'invention

Le domaine de l'invention concerne celui des procédés de fabrication pour pièces d'horlogerie, en particulier d'une aiguille d'horlogerie de section circulaire.

Arrière-plan technologique

Les aiguilles sont généralement plates avec deux dimensions, et sont obtenues par un procédé de fabrication d'aiguilles consistant habituellement à la découpe d'une plaque de métal.

Afin de les assembler sur le mouvement, un trou est formé dans les aiguilles, pour être ensuite emmanchées sur une tige traversant le cadran. Aujourd'hui, des procédés laser peuvent être utilisés pour découper les tôles.

Ce procédé de fabrication est facile à mettre en œuvre, mais il est limité à la réalisation d'aiguilles bidimensionnelles. Pour des raisons esthétiques, si l'on souhaite obtenir une forme de section circulaire de l'aiguille, ce procédé ne peut être utilisé. On entend en particulier par section circulaire, une aiguille à géométrie rotative.

Pour former des axes ou des pivots de mouvement d'horlogerie, il existe des procédés de tournage laser, consistant à mettre en rotation un corps monobloc pour l'usiner et le découper avec le faisceau laser. Le corps est maintenu par une machine, qui le fait tourner à une vitesse prédéfinie, pendant que le faisceau laser est appliqué à la périphérie du corps pour le tailler. Ainsi, on obtient une pièce de section circulaire, par exemple cylindrique ou conique.

Cependant, un tel procédé ne peut être utilisé tel quel pour former des aiguilles de section circulaire, car des défauts géométriques apparaissent sur l'aiguille. En effet, comme les aiguilles sont fines et longues, l'opération de tournage peut vibrer ou décaler le corps, de sorte que l'usinage laser perd en précision pour obtenir une aiguille de section circulaire.

Résumé de l'invention

La présente invention se propose de résoudre tout ou partie de ces inconvénients par l'intermédiaire d'une aiguille fabriquée selon un procédé de fabrication d'une aiguille d'horlogerie monobloc par lumière laser.

Ledit procédé est remarquable en ce qu'il comprend :

- une première étape consistant à se munir d'une pièce monobloc en matériau prédéfini, la pièce s'étendant selon un axe longitudinal ;

- une deuxième étape consistant à mettre en rotation ladite pièce monobloc ;

- une troisième étape consistant à émettre une première modulation de ladite lumière laser, par exemple en puissance, et/ou en géométrie, et/ou en temps ;

- une quatrième étape consistant à exposer une première portion de ladite au moins une pièce monobloc à ladite première modulation de ladite lumière laser de sorte à former au moins un premier volume de section circulaire, par exemple cylindrique ou conique, d'une longueur $L_1$ et d'un diamètre moyen $D_1$, le rapport $\dfrac{L_1}{D_1}$ étant inférieur ou égal à 10, voire inférieur ou égal à 5 ;

- une cinquième étape consistant à émettre une deuxième modulation de ladite lumière laser, par exemple en puissance, et/ou en géométrie et/ou en temps ; et

- une sixième étape consistant à exposer une deuxième portion de ladite au moins une pièce monobloc à ladite deuxième modulation de ladite lumière laser, de sorte à former au moins un deuxième volume de section circulaire, par exemple cylindrique ou conique, d'une longueur $L_2$ et d'un diamètre moyen $D_2$, le rapport $\dfrac{L_2}{D_2}$ étant inférieur ou égal à 10, voire inférieur ou égal à 5.

Grâce à ce procédé, il est possible de fabriquer des aiguilles à trois dimensions de section circulaire, qui sont en particulier cylindriques ou coniques. En effet, d'une part, grâce à l'usinage rotatif, on obtient une forme de section circulaire de l'aiguille. Mais en réalisant l'aiguille par portions de longueur $L$ et de diamètre moyen $D$, dont le rapport $\dfrac{L}{D}$ est inférieur ou égal à 10, voire inférieur ou égal à 5, on évite le risque de vibration de la pièce monobloc, et donc le risque de défauts géométriques.

Selon un mode de réalisation particulier de l'invention, la deuxième portion est choisie adjacente à la première portion lors de la sixième étape du procédé de fabrication.

Selon un mode de réalisation particulier de l'invention, ledit procédé de fabrication comprend des étapes supplémentaires d'émissions de modulation de ladite lumière laser et d'exposition de portions supplémentaires, de préférence adjacents les unes aux autres, pour former des volumes de section circulaire supplémentaires, par exemple cylindrique ou conique, avec un rapport $\dfrac{L}{D}$ inférieur ou égal à 10, voire inférieur ou égal à 5, afin d'obtenir une longueur d'aiguille souhaitée.

Selon un mode de réalisation particulier de l'invention, la première portion est choisie à une extrémité libre de la pièce monobloc.

Selon un mode de réalisation particulier de l'invention, au moins le premier volume de section circulaire a un diamètre inférieur aux autres volumes de section circulaire.

Selon un mode de réalisation particulier de l'invention, les volumes de section circulaire forment une aiguille d'une longueur totale $Lt$, et d'un diamètre moyen $Dt$ dont le rapport $\frac{Lt}{Dt}$ est supérieur ou égal à 10, voire supérieur ou égal à 100.

Selon un mode de réalisation particulier de l'invention, la plupart des portions sont usinées pour que les volumes de section circulaire aient sensiblement la même longueur $L$.

Selon un mode de réalisation particulier de l'invention, la plupart des portions sont usinées pour que les volumes de section circulaire soient cylindriques et aient sensiblement le même diamètre $D$.

Selon un mode de réalisation particulier de l'invention, la plupart des portions sont usinées pour que les volumes de section circulaire aient un diamètre décroissant pour former une aiguille conique.

Selon un mode de réalisation particulier de l'invention, le procédé comprend une étape supplémentaire précédant la sixième étape et/ou une étape d'exposition supplémentaire, dans laquelle on déplace la pièce monobloc pour exposer la deuxième portion ou la portion supplémentaire.

Selon un mode de réalisation particulier de l'invention, le procédé comprend une étape préalable dans laquelle on perce un trou dans la pièce monobloc, par exemple au laser, en particulier pour pouvoir y insérer une tige de mouvement d'horlogerie.

Selon un mode de réalisation particulier de l'invention, on usine préalablement une portion destinée au volume de section circulaire pour le trou avec un diamètre supérieur aux autres volumes de section circulaire.

Selon un mode de réalisation particulier de l'invention, le matériau comprend, de préférence en totalité, soit un métal tel que l'acier, le titane, le laiton, l'aluminium, un métal amorphe, ou un alliage de ces métaux, soit de la céramique composite ou métallique, soit du verre, du saphir, du diamant, ou du rubis.

Selon un mode de réalisation particulier de l'invention, le procédé comprend une étape supplémentaire d'application d'une couche de matériau phosphorescent sur un volume de section circulaire, le volume de section circulaire ayant de préférence un diamètre réduit par rapport aux autres volumes de section circulaire.

L'invention se rapporte également à une aiguille d'horlogerie susceptible d'être obtenue par le procédé selon l'invention, l'aiguille comprenant un corps de section circulaire, par exemple cylindrique ou conique, monobloc.

Selon un mode de réalisation particulier de l'invention, l'aiguille d'horlogerie comprend un trou.

Selon un mode de réalisation particulier de l'invention, l'aiguille d'horlogerie comprend, de préférence en totalité, soit un métal tel que l'acier, le titane, le laiton, l'aluminium, un métal amorphe, ou un alliage de ces métaux, soit de la céramique composite ou métallique, soit du verre, du saphir, du diamant, ou du rubis.

L'invention se rapporte également à une pièce d'horlogerie comprenant une telle aiguille.

Brève description des figures

Les buts, avantages et caractéristiques de la présente invention apparaîtront à la lecture de plusieurs formes de réalisation données uniquement à titre d'exemples non limitatifs, en référence aux dessins annexés dans lesquels :

- la figure 1 représente un procédé de fabrication d'une aiguille d'horlogerie de section circulaire monobloc par lumière laser selon l'invention,

- la figure 2 représente schématiquement une vue de côté de l'usinage d'une aiguille d'horlogerie de section circulaire monobloc obtenue par le procédé de la figure 1,

- les figures 3 à 5 représentent schématiquement une vue de côté de l'aiguille après plusieurs étapes du procédé de réalisation de selon l'invention,

- la figure 6 représente schématiquement une vue en perspective d'une aiguille d'horlogerie de section circulaire monobloc obtenue par le procédé de la figure 1, et

- la figure 7 représente schématiquement une vue coupe de côté d'une aiguille d'horlogerie de section circulaire monobloc réalisée par ledit procédé de fabrication selon l'invention.

Description détaillée de l'invention

La présente invention concerne l'utilisation d'une source de lumière laser pour former une aiguille d'horlogerie monobloc de section circulaire. Dans le mode de réalisation décrit ci-dessous, l'aiguille est de forme cylindrique.

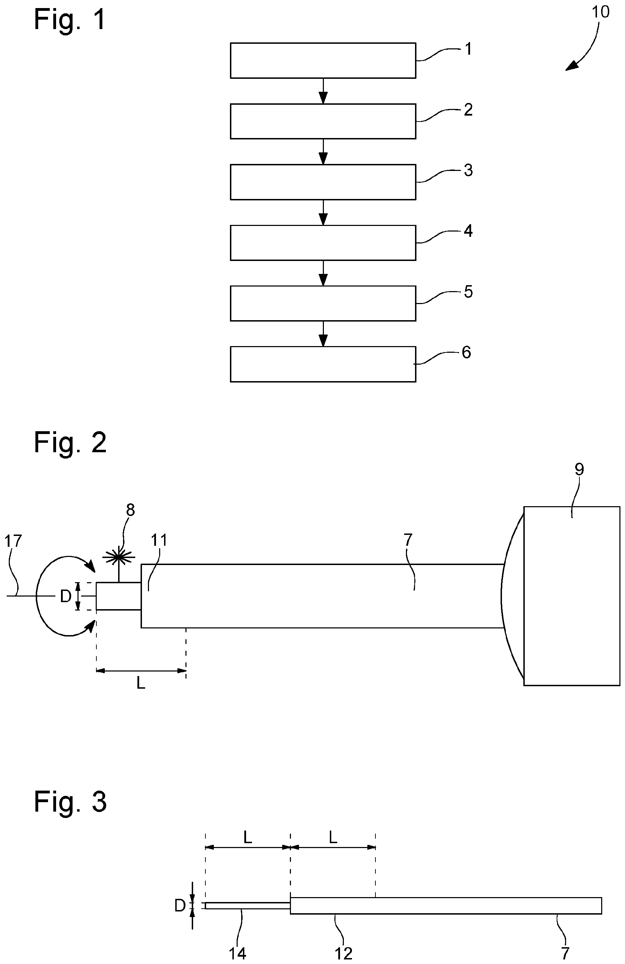

Selon l'invention, ledit procédé de fabrication 1, représenté sur les figures 1 à 5 comprend plusieurs étapes.

Dans une première étape 1, on se munit d'une pièce monobloc 7 en un matériau prédéfini. Par exemple, le matériau prédéfini comprend, de préférence en totalité, soit un métal tel que l'acier, le titane, le laiton, l'aluminium, un métal amorphe, ou un alliage de ces métaux, soit de la céramique composite ou métallique, soit du verre, du saphir, du diamant, ou du rubis.

De préférence, on choisit l'alliage de titane pour sa légèreté. D'autres matériaux compatibles avec l'usinage laser sont bien-sûr possibles.

La pièce monobloc 7 est de préférence allongée selon un axe longitudinal 17 d'une longueur au moins égale à la longueur de l'aiguille souhaitée. La pièce monobloc 7 peut-être monobloc ou déjà passée par une étape d'ébauche par usinage. La pièce monobloc 7 est de préférence pleine, c'est-à-dire sans cavité.

La deuxième étape 2 consiste à mettre en rotation ladite pièce monobloc 7 pour obtenir la forme de section circulaire souhaitée, ici cylindrique. La pièce monobloc 7 est usinée par un dispositif d'usinage laser. La pièce monobloc 7 est agencée sur un dispositif rotatif 9 de tournage, qui fait tourner la pièce monobloc 7 autour de son axe longitudinal 17 afin de l'usiner à sa périphérie.

Dans une troisième étape 3, on émet une première modulation de ladite lumière laser 8, par exemple en puissance, et/ou en géométrie et/ou en temps, pour tailler une portion au diamètre souhaité, par exemple grâce à dispositif laser.

La quatrième étape 4 consiste à exposer une première portion 11 de ladite au moins une pièce monobloc 7 à ladite première modulation de ladite lumière laser 8, de sorte à former au moins un premier volume cylindrique 14 de longueur $L_1$ et de diamètre moyen $D_1$. En effet, ladite lumière laser est modulée selon certains paramètres de sorte qu'à l'exposition d'au moins une première portion 11 de ladite pièce monobloc 7, un premier volume cylindrique 14 soit formé.

On choisit une longueur de portion $L_1$ de sorte que le rapport $\dfrac{L_1}{D_1}$ est inférieur ou égal à 20 ou 10, voire inférieur ou égal à 5. Avec un tel rapport, on évite les défauts de fabrication, qui surviennent lorsque la longueur d'usinage est trop grande par rapport au diamètre de la portion. En effet, comme le laser 8 se déplace le long de la portion 11, une portion 11 trop longue par rapport au diamètre D a tendance à fléchir, de sorte que l'usinage n'est plus précis et engendre des défauts.

Pour usiner la pièce monobloc 7, celle-ci peut être en outre mobile en translation par rapport au dispositif laser, le dispositif laser étant immobile. En variante, le dispositif laser est mobile en translation, tandis que la pièce monobloc 7 est seulement mobile en rotation. Le dispositif laser et la pièce monobloc 7 peuvent encore être mobiles en translation tous les deux.

On émet ensuite dans une cinquième étape 5 une deuxième modulation de ladite lumière laser 8, par exemple en puissance, et/ou en géométrie et/ou en temps.

Dans une sixième étape 6, on expose au moins une deuxième portion 12 de ladite pièce monobloc 7 à ladite deuxième modulation de ladite lumière laser 8, de sorte à former au moins un deuxième volume cylindrique 15 d'une longueur $L_2$ et d'un diamètre moyen $D_2$. le rapport $\dfrac{L_2}{D_2}$ étant inférieur ou égal à 20, de préférence 10, voire inférieur ou égal à 5.

La deuxième portion 12 est adjacente à la première portion 11. Autrement dit, elles sont consécutives, et orientées autour du même axe longitudinal 17. Par ailleurs, il est également possible de configurer ladite deuxième modulation tout comme ladite première modulation de la lumière laser en puissance et en temps.

Dans ce mode de réalisation, on choisit de faire des volumes cylindriques de longueurs égales, de sorte que $L_1 = L_2 = L$. Dans des variantes de réalisation, on peut usiner les volumes cylindriques avec des longueurs différentes les unes des autres, à condition de garder un rapport $\dfrac{L}{D}$ inférieur ou égal à 20 ou 10, voire inférieur ou égal à 5 pour chaque volume cylindrique.

Selon la longueur totale $Lt$ de l'aiguille que l'on souhaite obtenir, on procède à l'exposition de portions supplémentaires 13 de la pièce monobloc 7, de manière à obtenir une aiguille 20 plus longue.

Les étapes d'émission et d'exposition à une modulation du laser 8 sont répétées plusieurs fois pour obtenir une pluralité de volumes cylindriques 14, 15, 16 adjacents consécutifs.

Sur la figure 2, on usine au laser la première portion 11 de longueur $L$ pour former un premier volume cylindrique 14 de diamètre $D$ et de longueur $L$ à l'extrémité de la pièce monobloc 7, telle que représentée sur la figure 3. On sélectionne ensuite une deuxième portion 12 de longueur $L$, qui est adjacente à la première portion 11.

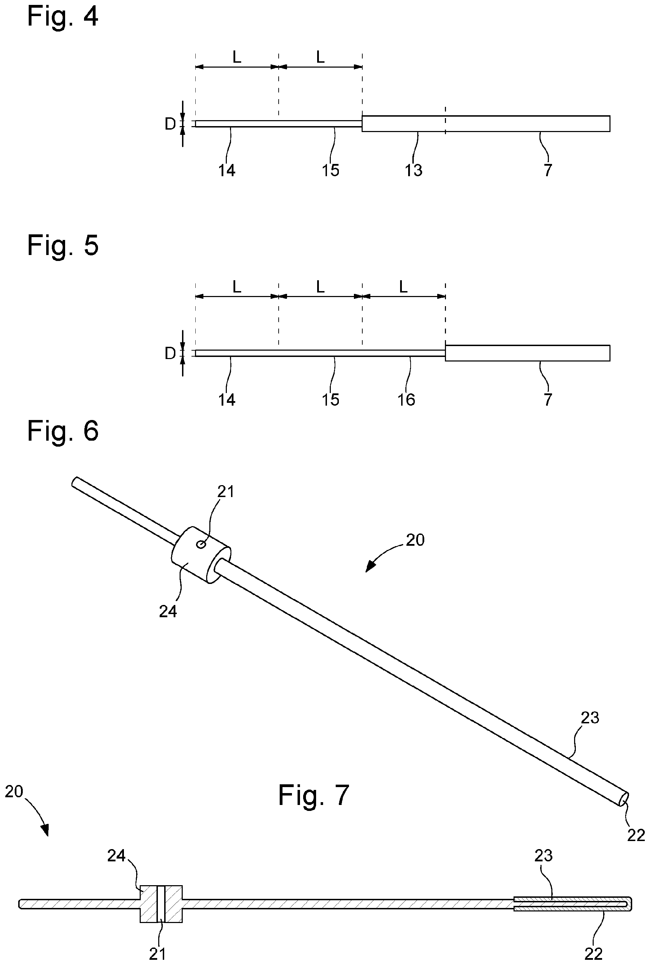

Après l'usinage laser de la deuxième portion 12, on obtient un deuxième volume cylindrique 15, formant avec le premier volume cylindrique 14 l'extrémité de l'aiguille, comme le montre la figure 4.

On choisit ensuite une troisième portion 13 de longueur $L$ de la pièce monobloc 7, qui est adjacente au deuxième volume cylindrique 15. La troisième portion 13 est usinée au laser pour former un troisième volume cylindrique 16 de diamètre moyen $D$ et de longueur $L$, représenté sur la figure 5.

L'aiguille 20 a par exemple une longueur de 15 à .20 mm, et un diamètre moyen de 0.2mm à 0.5mm à une extrémité et de 0.3mm à 0.6mm à l'autre extrémité.

Les étapes d'usinage laser sont répétées sur des portions adjacentes supplémentaires jusqu'à l'obtention de la longueur totale $Lt$ souhaitée pour l'aiguille 20. Ainsi, l'aiguille 20 comprend un corps cylindrique monobloc.

De préférence, les volumes cylindriques 14, 15, 16 obtenus ont sensiblement le même diamètre $D$, afin que l'aiguille 20 ait un diamètre sensiblement égal sur toute sa longueur $Lt$.

Les volumes cylindriques 14, 15, 16 consécutifs forment une aiguille 20 d'une longueur totale *Lt* dont le rapport $\dfrac{Lt}{D}$ est de préférence supérieur ou égal à 10, voire supérieur ou égal à 100.

Le procédé peut en outre comprendre une étape ultérieure de finition de surface sur les volumes adjacents 14, 15, 16 pour garantir que la forme et la finition soient sensiblement continue. Cette étape peut être réalisée par laser avec des paramètre plus doux pour réaliser une surface à faible rugosité et faire disparaitre l'interface entre deux volumes consécutifs traités.

Le procédé peut en outre comprendre une étape de perçage d'un trou 21 pour pouvoir insérer une tige, l'étape de perçage pouvant être effectuée avant ou après l'usinage laser.

De préférence, le trou est effectué préalablement à travers une portion de la pièce monobloc 7, c'est-à-dire avant l'usinage du volume cylindrique 24 comportant le trou 21. Ainsi, l'aiguille 20 des figures 6 et 7 présente un trou 21 pour y insérer la tige d'un mouvement d'horlogerie. En perçant le trou 21 avant l'usinage laser, on évite de le faire dans l'aiguille, qui est trop fine. La pièce monobloc 7 étant plus large, il est plus facile de la maintenir pour percer le trou 21.

De préférence, au moins une partie du volume cylindrique 24 comprenant le trou 21 a un diamètre supérieur aux autres volumes cylindriques, en particulier pour que le trou 21 soit assez profond pour accueillir la tige et que le volume cylindrique 24 soit suffisamment solide. Le trou 21 peut être percé par différentes techniques d'usinage, notamment au laser.

Dans une variante de réalisation particulière, représentée sur les figures 6 et 7, au moins un volume cylindrique 22 de l'extrémité de l'aiguille 20 a un diamètre réduit. La réduction du diamètre permet de déposer sur le volume cylindrique réduit une couche de matière phosphorescente 23. Ceci permet par exemple d'obtenir une extrémité de l'aiguille 20 du même diamètre que les autres volumes cylindriques 22. Pour cela, on choisit un diamètre de volume cylindrique 22 diminué de l'épaisseur de la couche de matière phosphorescente 23 appliquée ultérieurement.

Un des avantages de ce procédé est la fabrication d'une aiguille d'horlogerie cylindrique monobloc 20, qui est plus rigide qu'une aiguille plate, et qui apporte en outre un effet esthétique particulier à l'aiguille 20.

De plus, l'aiguille 20 ayant en outre un trou 21 formé directement dans l'aiguille monobloc 20, on évite de rapporter une pièce supplémentaire munie d'un canon, et qui doit être assemblée sur l'aiguille 20 pour pouvoir maintenir l'aiguille 20 sur une tige du mouvement d'horlogerie. Ainsi, les difficultés d'assemblage sont réduites, ainsi que le risque de désassemblage.

Naturellement, l'invention n'est pas limitée au mode de réalisation décrit en référence aux figures, et des variantes pourraient être envisagées sans sortir du cadre de l'invention. Ainsi, le procédé peut être utilisé pour former une aiguille de forme conique, en formant des portions coniques dont le diamètre décroit à la suite les unes des autres. Il est aussi possible de former une aiguille dont le diamètre varie avec des volumes différents pourvus qu'ils soient de section circulaire.

**Revendications**

1. Procédé de fabrication (10) d'une aiguille d'horlogerie monobloc par lumière laser, **caractérisé en ce que** ledit procédé de fabrication (1) comprend :

   - une première étape (1) consistant à se munir d'une pièce monobloc (7) en matériau prédéfini, la pièce s'étendant selon un axe longitudinal ;
   - une deuxième étape (2) consistant à mettre en rotation ladite pièce monobloc (7) ;
   - une troisième étape (3) consistant à émettre une première modulation de ladite lumière laser (8), par exemple en puissance, et/ou en géométrie, et/ou en temps ;
   - une quatrième étape (4) consistant à exposer une première portion (11) de ladite au moins une pièce monobloc (7) à ladite première modulation de ladite lumière laser (8), de sorte à former au moins un premier volume de section circulaire (14), par exemple cylindrique ou conique, d'une longueur $L_1$ et d'un diamètre moyen $D_1$, le rapport $\dfrac{L_1}{D_1}$ étant inférieur ou égal à 20, de préférence 10, voire inférieur ou égal à 5 ;
   - une cinquième étape (5) consistant à émettre une deuxième modulation de ladite lumière laser (8), par exemple en puissance, et/ou en géométrie, et/ou en temps ; et
   - une sixième étape (6) consistant à exposer une deuxième portion (12) de ladite au moins une pièce monobloc (7) à ladite deuxième modulation de ladite lumière laser (8), de sorte à former au moins un deuxième volume de section circulaire (15), par exemple cylindrique ou conique, d'une longueur $L_2$ et d'un diamètre moyen $D_2$, le rapport $\dfrac{L_2}{D_2}$ étant inférieur ou égal à 20, de préférence 10, voire inférieur ou égal à 5.

2. Procédé de fabrication (10) selon la revendication 1, dans lequel la deuxième portion (12) est choisie adjacente à la première portion (11) lors de la sixième étape (6).

3. Procédé de fabrication (10) selon la revendication 1 ou 2, comprenant des étapes supplémentaires d'émissions de modulation de ladite lumière laser (8) et d'exposition de portions supplémentaires (13), de préférence adjacentes les unes aux autres, pour former des volumes de section circulaire supplémentaires (16), par exemple cylindrique ou conique, avec un rapport $\frac{L}{D}$ inférieur ou égal à 20, de préférence 10, voire inférieur ou égal à 5, afin d'obtenir une longueur d'aiguille (20) souhaitée.

4. Procédé de fabrication (10) selon l'une, quelconque, des revendications précédentes, dans lequel la première portion (11) est choisie à une extrémité libre de la pièce monobloc (7).

5. Procédé de fabrication (10) selon l'une, quelconque, des revendications précédentes, dans lequel au moins le premier volume de section circulaire (14) a un diamètre inférieur aux autres volumes de section circulaire (15, 16).

6. Procédé de fabrication (10) selon l'une, quelconque, des revendications précédentes, dans lequel les volumes de section circulaire (14, 15, 16) forment une aiguille (20) d'une longueur totale $Lt$ et d'un diamètre moyen $Dt$, dont le rapport $\frac{Lt}{Dt}$ est supérieur ou égal à 10, voire supérieur ou égal à 100.

7. Procédé de fabrication (10) selon l'une, quelconque, des revendications précédentes, dans lequel la plupart des portions (11, 12, 13) sont usinées pour que les volumes de section circulaire (14, 15, 16) aient sensiblement la même longueur $L$.

8. Procédé de fabrication (10) selon l'une, quelconque, des revendications précédentes, dans lequel la plupart des portions (11, 12, 13) sont usinées pour que les volumes de section circulaire (14, 15, 16) soient cylindriques et aient sensiblement le même diamètre D.

9. Procédé de fabrication (10) selon l'une, quelconque, des revendications 1 à 7, dans lequel la plupart des portions sont usinées pour que les volumes de section circulaire aient un diamètre décroissant pour former une aiguille conique.

10. Procédé de fabrication (10) selon l'une, quelconque, des revendications précédentes, comprenant une étape supplémentaire précédant la sixième étape (6) et/ou une étape d'exposition supplémentaire, dans laquelle on déplace la pièce monobloc (7) pour exposer la deuxième portion (12) ou la portion supplémentaire (13).

11. Procédé de fabrication (10) selon l'une, quelconque, des revendications précédentes, comprenant une étape préalable dans laquelle on perce un trou (21) dans la pièce monobloc (7), par exemple au laser, en particulier pour pouvoir y insérer une tige de mouvement d'horlogerie.

12. Procédé de fabrication (10) selon la revendication 11, dans lequel on usine la portion de pièce monobloc (7) munie du trou (21) avec un diamètre supérieur aux autres volumes de section circulaire (11, 12, 13).

13. Procédé de fabrication (10) selon l'une, quelconque, des revendications précédentes, dans lequel le matériau comprend, de préférence en totalité, soit un métal tel que l'acier, le titane, le laiton, l'aluminium, un métal amorphe, ou un alliage de ces métaux, soit de la céramique composite ou métallique, soit du verre, du saphir, du diamant, ou du rubis.

14. Procédé de fabrication (10) selon l'une, quelconque, des revendications précédentes, comprenant une étape supplémentaire d'application d'une couche de matériau phosphorescent (23) sur un volume de section circulaire (22), le volume de section circulaire (22) ayant de préférence un diamètre réduit.

15. Aiguille d'horlogerie (20) susceptible d'être obtenue par le procédé (10) selon l'une, quelconque, des revendications précédentes, **caractérisée en ce qu'**elle comprend un corps de section circulaire, par exemple cylindrique ou conique, monobloc.

16. Aiguille d'horlogerie (20) selon la revendication 15 comprenant un trou (21) pour une tige de mouvement d'horlogerie.

17. Aiguille d'horlogerie (20) selon la revendication 15 ou 16, comprenant, de préférence en totalité, soit un métal tel que l'acier, le titane, le laiton, l'aluminium, un métal amorphe, ou un alliage de ces métaux, soit de la céramique composite ou métallique, soit du verre, du saphir, du diamant, ou du rubis.

18. Pièce d'horlogerie comprenant une aiguille d'horlogerie (20) selon l'une, quelconque, des revendications 15 à 17.

Fig. 1

1

2

3

4

5

6

10

Fig. 2

17

8

11

D

7

9

L

Fig. 3

L

L

D

14

12

7

# Fig. 4

# Fig. 5

# Fig. 6

# Fig. 7

**Europäisches Patentamt**
**European Patent Office**
**Office européen des brevets**

# RAPPORT DE RECHERCHE EUROPEENNE

Numéro de la demande

**EP 22 19 9247**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 862 819 A1 (ROLEX SA [CH]) 11 août 2021 (2021-08-11) | 1-8, 10-13 | INV. G04B19/04 |
| Y | * alinéa [0021] * * alinéa [0038] * * alinéa [0050] * * figure 4 * ----- | 9,14 | G04D3/00 G04D3/02 |
| X | CH 716 584 A2 (SWATCH GROUP RES & DEV LTD [CH]) 15 mars 2021 (2021-03-15) * alinéa [0025] – alinéa [0026] * * figures 2,4 * ----- | 15-18 | |
| X | CN 204 178 139 U (LI XI) 25 février 2015 (2015-02-25) * abrégé; figures * ----- | 15 | |
| Y | JP S50 128068 U (-) 21 octobre 1975 (1975-10-21) * figure 2 * * alinéa [0002] * ----- | 9 | |
| Y | US 2003/099160 A1 (UENO MASATO [JP] ET AL) 29 mai 2003 (2003-05-29) * alinéa [0055] * ----- | 14 | DOMAINES TECHNIQUES RECHERCHES (IPC) G04B G04D |
| A | CH 710 007 A2 (UNIVERSO SA [CH]) 29 février 2016 (2016-02-29) * alinéa [0017] * * figures * ----- | 1 | |

Le présent rapport a été établi pour toutes les revendications

| Lieu de la recherche | Date d'achèvement de la recherche | Examinateur |
|---|---|---|
| La Haye | 12 mai 2023 | Lupo, Angelo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 19 9247

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2023

| Document brevet cité au rapport de recherche | | | Date de publication | Membre(s) de la famille de brevet(s) | | | Date de publication |
|---|---|---|---|---|---|---|---|
| EP 3862819 | A1 | | 11-08-2021 | CN | 113219814 | A | 06-08-2021 |
| | | | | EP | 3862819 | A1 | 11-08-2021 |
| | | | | JP | 2021131383 | A | 09-09-2021 |
| | | | | US | 2021238701 | A1 | 05-08-2021 |
| CH 716584 | A2 | | 15-03-2021 | AUCUN | | | |
| CN 204178139 | U | | 25-02-2015 | AUCUN | | | |
| JP S50128068 | U | | 21-10-1975 | AUCUN | | | |
| US 2003099160 | A1 | | 29-05-2003 | CN | 1423244 | A | 11-06-2003 |
| | | | | JP | 2003227884 | A | 15-08-2003 |
| | | | | KR | 20030044798 | A | 09-06-2003 |
| | | | | TW | 580657 | B | 21-03-2004 |
| | | | | US | 2003099160 | A1 | 29-05-2003 |
| | | | | US | 2006013074 | A1 | 19-01-2006 |
| CH 710007 | A2 | | 29-02-2016 | AUCUN | | | |

EPO FORM P0460

Pour tout renseignement concernant cette annexe : voir Journal Officiel de l'Office européen des brevets, No.12/82